# EUROPEAN PATENT SPECIFICATION

(11) **EP 2 589 615 B1**
(45) Date of publication and mention of the grant of the patent: **04.01.2017**
(21) Application number: 12007419.0
(22) Date of filing: 30.10.2012
(51) Int. Cl.: C08G 65/336, C08G 65/337, C08L 71/02, C03C 17/30

(54) **Fluorooxyalkylene group-containing polymer composition, surface treatment agent containing the composition, and article and optical article treated with the surface treatment agent**
Fluoroxyalkylengruppenhaltige Polymerzusammensetzung, Oberflächenbehandlungsmittel mit der Zusammensetzung, und Artikel, und mit dem Oberflächenbehandlungsmittel behandelter optischer Artikel
Composition polymère contenant un groupe fluorooxyalkylene, agent de traitement de surface contenant la composition et article et article optique traité avec l'agent de traitement de surface

(30) Priority: 01.11.2011 JP 2011240466
(43) Date of publication of application: 08.05.2013
(73) Proprietor: Shin-Etsu Chemical Co., Ltd., Chiyoda-ku, Tokyo (JP)
(72) Inventor: Komori, Hisatoshi, Gunma-ken (JP); Yamane, Yuji, Gunma-ken (JP); Koike, Noriyuki, Gunma-ken (JP)
(74) Representative: Wibbelmann, Jobst

(56) References cited:
- EP-A1- 1 238 949
- EP-A1- 2 130 850
- EP-A1- 2 316 869
- EP-A2- 0 465 263
- EP-A2- 0 745 604

## Description

### Background of the invention

### Field of the invention

The present invention relates to a fluorooxyalkylene group-containing polymer composition, a surface treatment agent comprising the composition, and an article and an optical article treated with the surface treatment agent.

### Description of the Related Art

Compounds containing a perfluorooxyalkylene moiety generally have a very small surface free energy, and accordingly, have good water- and oil-repellency, chemical resistance, lubricity, releasing property, and antifouling property. Taking advantage of these properties, they are widely used as, for example, water- and oil-repellent agents or antifouling agents for paper or fiber, lubricants for magnetic storage media, oil repellents components for precision apparatuses, releasing agents, cosmetic, and top coat.

These properties, on the other hand, mean that such components do not stick or closely adhere to other substrates, either. Even if they can be applied to a substrate, it is difficult to have a coating closely adhered to the substrate.

Meanwhile, silane coupling agents are well known as an agent which bonds an organic compound to a surface of a substrate such as glass or a cloth. The silane coupling agents have an organic functional group and a reactive silyl group, usually an alkoxy silyl group, in a molecule. The alkoxy silyl group autocondenses in the presence of moisture in air to become a siloxane and forms a coating. At the same time, the alkoxy silyl group chemically and physically bonds to a surface of glass or metal to form a durable coating. Taking advantage of these properties, the silane coupling agents are widely used as a coating agent for various substrates. Compounds based on the silane coupling agents to provide the feature of the perfluorooxyalkylene moieties on a surface of a substrate are known.

For instance, Patent Document 1 discloses that a fluoroaminosilane compound represented by the following formula is applied on glass to attain high water- and oil-repellency, 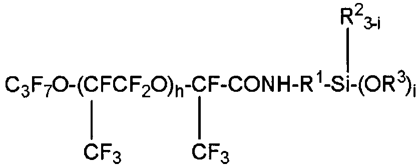 wherein R² and R³ represent alkyl groups having 1 to 4 carbon atoms, R¹ represents CH₂CH₂CH₂ or CH₂CH₂NHCH₂CH₂CH₂, "h" represents an integer of from 0 to 8, and "i" represents 2 or 3.

However, the perfluorooxyalkylene moiety of this compound is relatively short, so that the characteristics of the perfluorooxyalkylene moiety, particularly lubricity, a releasing property, and an antifouling resistance, are not well exhibited.

Patent Document 2 discloses a perfluoropolyether-modified aminosilane represented by the following formula, as a compound having a long perfluorooxyalkylene moiety, 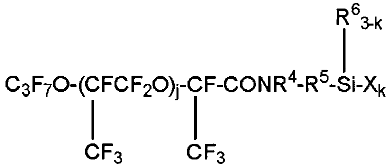 wherein X represents a hydrolyzable group, R⁴ represents a monovalent hydrocarbon group, R⁶ represents a hydrogen atom or a monovalent hydrocarbon group, R⁵ represents an alkylene group optionally interrupted by an NH group, "j" represents an integer of from 14 to 49, and "k" represents 2 or 3.

The above perfluoropolyether-modified aminosilane has a high water- and water-repellency on account of the terminal fluorine-containing group. However, its stain resistance and lubricity are insufficient due to branch structure in the main chain.

Recently, there has been an increasing need for technology to attain fingerprint proofness or easy removal of fouling on a surface of a display for better appearance and visibility. Thus, a material which meets these requirements is desired.

Easy wiping off stain depends on a dynamic friction on a surface of a coating, if releasing properties of stains are same. Further, of two coatings which have same adhesiveness to a substrate, a coating having a lower dynamic friction has better attrition resistance and abrasion resistance, compared to another coating having a higher dynamic friction. Therefore, a surface treatment agent is desired which attains good water- and oil-repellency, low dynamic friction coefficient, and good releasing property all together, and thereby maintains the surface of the good water- and oil-repellency, low dynamic friction coefficient, and good releasing property for a longer period.

Patent Document 3 discloses a perfluoropolyether-modified silane represented by the following formula, as a treatment agent which has a perfluorooxyalkylene moiety with no branch structure in the main chain, 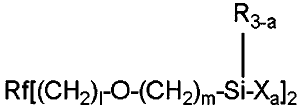 wherein Rf represents a divalent linear perfluoropolyether group, R represents an alkyl group having 1 to 4 carbon atoms or a phenyl group, X represents a hydrolyzable group, "1" represents an integer of from 0 to 2, "m" represents an integer of from 1 to 5, and "a" represents 2 or 3.

Lenses and anti-reflection coatings treated with the perfluoropolyether-modified silane are good in stainproofness, easy removal of fouling, lubricity and a releasing property, compared to the perfluoropolyether-modified silane having a branch structure. Further, abrasion resistance is superior to the prior perfluoropolyether-modified silane, because the both terminals thereof are fixed on a substrate. However, the lubricity intrinsic to this perfluoropolyether is not well exhibited due to the both terminals being fixed on a substrate, so that further improvement is required. Further, unreacted terminal moieties after curing reduce water- and oil-repellency, releasing property and lubricity. Therefore, improvement in these properties by decreasing unreacted terminal moiety is desired.

Patent Document 4 discloses a perfluoropolyether-modified silane represented by the following formula, as a treatment agent which has improved lubricity,

(Z²Q)_{β}Rf (QZ¹A_{α})_{2-β}

wherein Rf represents a divalent perfluoroether-containing group, Q represents a divalent organic group, Z¹ and Z² represent organopolysiloxane moieties, A represents a monovalent group having a terminal reactive silyl group, "α" represents an integer of from 1 to 8, and "β" represents the number larger than 0 and less than 2. However, this compound does not have a terminal fluorinated group, so that its water- and oil-repellency, dynamic friction coefficient and releasing property are inferior.

Patent Document 5 discloses a composition comprising a mixture of a one-terminal modified fluorooxyalkylene group-containing polymer having a fluorine group at one terminal and a both-terminal modified fluorooxyalkylene group-containing polymer represented by the following formula, as a treatment agent having excellent water- and oil-repellency, low dynamic friction coefficient, and releasing property at the same time,

A-Rf¹-B

wherein Rf¹ represents a divalent linear fluorooxyalkylene group containing 5 to 100 repeating units represented by - C_{d}F_{2d}O-, wherein "d" represents, independently of each other, an integer of from 1 to 6; and A and B represent, independently of each other, an Rf² group or a group represented by the following formula, wherein Rf² is selected from the group consisting of F, H and a monovalent fluorinated group having a -CF₃ or -CF₂H group at the terminal, 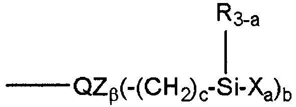 wherein Q represents a divalent organic group, Z represents a divalent to heptavalent organopolysiloxane group having a siloxane bond, R represents an alkyl group having 1 to 4 carbon atoms or a phenyl group, X represents a hydrolyzable group, "a" represents 2 or 3, and "b" represents an integer of from 1 to 6, "c" represents an integer of from 1 to 5, and "β" represents 0 or 1;

However, the treatment agent is problematic, because the resulting smaller number of reactive terminals can reduce adhesiveness to a substrate and is inferior in alkaline resistance when a linking group is converted to a siloxane chain. Therefore, much improvement has been demanded to maintain a desired effectiveness for a longer period.

Patent document 6 discloses a liquid polymer which is a polysilethylene siloxane. This polymer is mentioned as being quite useful as a major component of elastomer compositions having chemical resistance, electrical properties, and high strength.

### CITATION LIST

### PATENT LITERATURE

Patent Document 1: Japanese Patent Publication Laid-Open No. S58-167597
Patent Document 2: Japanese Patent Publication Laid-Open No. 2000-143991
Patent Document 3: Japanese Patent Publication Laid-Open No. 2003-238577
Patent Document 4: Japanese Patent Publication Laid-Open No. 2007-297589
Patent Document 5: Japanese Patent Publication Laid-Open No. 2011-116947
Patent Document 6: European patent application EP 0 465 263 A2.

### SUMMARY OF THE INVENTION

Accordingly, it is an object of the present invention to provide a fluorooxyalkylene group-containing polymer composition, and more particularly to a fluorooxyalkylene group-containing polymer composition, which yields a coating having good water- and oil-repellency, a low dynamic friction coefficient, good releasing property, good property of wiping off stain, and good abrasion resistance and excellent adhesiveness to a substrate, good alkaline resistance and to provide a surface treatment agent containing the composition, an article and an optical article treated with the surface treatment agent.

To solve the aforementioned problem, the present invention provides a fluorooxyalkylene group-containing polymer composition comprising a fluorooxyalkylene group-containing polymer having a hydrolyzable silyl group at one terminal, hereinafter called "one-terminal modified polymer," and a fluorooxyalkylene group-containing polymer having hydrolyzable silyl groups at both terminals, hereinafter called "both-terminal modified polymer," wherein the fluorooxyalkylene group-containing polymers are represented by the following average composition formula (1),

A-Rf¹-B (1)

wherein Rf¹ is a divalent linear fluorooxyalkylene group having 5 to 100 repeating units represented by -C_{d}F_{2d}O-, wherein "d" is, independently of each other, an integer of from 1 to 6; A and B represent, independently of each other, an Rf² group or a group represented by the following formula (2), 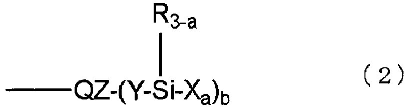 wherein Rf² is selected from the group consisting of F, H and a monovalent fluorinated group having a -CF₃ or -CF₂H group at the terminal, wherein Q represents a divalent organic group, Z represents a divalent to heptavalent linking group having a silalkylene structure or a silarylene structure but no siloxane bond, R represents an alkyl group having 1 to 4 carbon atoms or a phenyl group, X represents a hydrolyzable group, Y is a linking group represented by C_{c}H_{2c} or C₂H₄-CᵣF₂ᵣ-C₂H₄, "a" represents 2 or 3, and "b" represents an integer of from 1 to 6, "c" represents an integer of from 1 to 10, "r" represents an integer of from 1 to 6; wherein of the Rf² group accounts for 30 to 75 mole%, relative to a total of all of the terminal groups in the composition.

This type of a fluorooxyalkylene group-containing polymer composition yields a coating having good water- and oil-repellency, a low dynamic friction coefficient, good releasing property, good property of wiping off stain, good abrasion resistance, adhesiveness to a substrate and good alkaline resistance.

The fluorooxyalkylene group-containing polymer composition preferably comprises 40 to 100 mole% of the one-terminal modified polymer, and 0 to 60 mole% of the both-terminal modified polymer, relative to a total of the moles of the one-terminal modified polymer and the both-terminal modified polymer.

A 40 mole% or more content of the one-terminal modified polymer is preferable in view of water- and oil-repellency, low dynamic friction coefficient and releasing property due to a decrease in unreacted terminals after curing and an increase in terminal fluorinate groups. A 60 mole% or more content of the both-terminal modified polymer is unfavorable due to dominating properties thereof, resulting in damage to lubricity intrinsic to a linear perfluoropolyether.

The Rf¹ is preferably a divalent linear fluorooxyalkylene group represented by the following formula (5);

-CF₂ (OC₂F₄)_{f} (OCF₂)_{g}OCF₂- (5)

wherein "f" represents an integer of from 0 to 80, "g" represents an integer of from 1 to 80, and a total of "f" and "g" is from 5 to 100, and these repeating units may be sequenced at random.

Accordingly, Rf¹ is preferably a divalent linear fluorooxyalkylene group represented by the above formula (5) .

The Z is preferably a silethylene group or a silphenylene group.

Accordingly, a Z is preferably a silethylene group or silphenylene group as a divalent to heptavalent linking group containing a silalkylene structure or a silarylene structure but no siloxane bond.

The Q is preferably a hydrocarbon group having 2 to 12 carbon atoms and may contain one or more bonds selected from the group consisting of an amide bond, an ether bond, an ester bond and a vinyl bond.

Accordingly, the Q is preferably a hydrocarbon group having 2 to 12 carbon atoms and may contain one or more bonds selected from the group consisting of an amide bond, an ether bond, an ester bond and a vinyl bond as a divalent organic group.

The hydrolyzable group X is preferably a group selected from the group consisting of alkoxy groups, oxyalkoxy groups, acyloxy groups, alkenyloxy groups and halogen groups.

The hydrolyzable group X which bonds to a silicon atom in the above formula (2) is preferably a group selected from the above groups.

The present invention provides a surface treatment agent comprising the fluorooxyalkylene group-containing polymer composition and/or a fluorooxyalkylene group-containing polymer composition comprising a condensate of a hydrolyzate obtained by partially hydrolyzing the polymer composition as an active ingredient.

The present surface treatment agent is a surface treatment agent that can form a surface coating having excellent adhesiveness to a substrate, good water- and oil-repellency, good releasing property, a low dynamic friction coefficient and good stain resistance at the same time.

The present invention provides an article treated with the surface treatment agent. Also, the present invention provides an optical article treated with the surface treatment agent.

Accordingly, the present surface treatment agent can be used in various articles due to good water- and oil-repellency, good releasing property, low dynamic friction coefficient and good stain resistance. Particularly, the present surface treatment agent is useful in coating for preventing fingerprints or sebum from adhering to optical articles.

A coating obtained by curing the fluorooxyalkylene group-containing polymer composition of the present invention can adhere strongly to a substrate by the hydrolyzable silyl group via a linking group and is excellent in abrasion resistance. Since the above linking group can provide a coating that is excellent in alkaline resistance from no siloxane structure contained. The present fluorooxyalkylene group-containing polymer composition comprises a one-terminal modified polymer and a both-terminal modified polymer. A degree of steric freedom of the one-terminal modified polymer is larger than that of the both-terminal modified polymer, and contributes to lubricity of the surface. The fluorine atoms in the polymer tend to orient toward a surface of the coating to provide better water- and oil-repellency and releasing property.

The present fluorooxyalkylene group-containing polymer composition can provide a coating which has excellent adhesiveness to a substrate, water- and oil-repellency, low dynamic friction coefficient, abrasion resistance, property of wiping off stain and alkaline resistance. Therefore, the present composition can be used for a long period for various coating applications.

### DETAILED DESCRIPTION OF THE PREFERRED EMBODIMENTS

The present invention will be described in detail. As shown above, the development of surface treatment agents, which have excellent water- and oil-repellency, low dynamic friction coefficient, releasing property and property of wiping off stain and durability and maintain effective performance for a longer time, have been demanded.

The present inventors have found that a composition comprising 1) a one-terminal modified polymer to which a hydrolyzable group is bonded via a linking group having a fluorinated group at one terminal but no siloxane bond at the other terminal and 2) a both-terminal modified polymer to which a hydrolyzable group is bonded via a linking group having no siloxane bond at both terminals forms a coating which has excellent water- and oil-repellency, a low dynamic friction coefficient, good releasing property, good property of wiping off stain, good abrasion resistance, adhesiveness to a substrate and alkaline resistance.

The present invention will be described in more detail.

The present invention provides a fluorooxyalkylene group-containing polymer composition comprising a one-terminal modified polymer and a both-terminal modified polymer, wherein the fluorooxyalkylene group-containing polymers are represented by the following average composition formula (1),

A-Rf¹-B (1)

wherein, Rf¹ represents a divalent linear fluorooxyalkylene group having 5 to 100 repeating units represented by - C_{d}F_{2d}O-, wherein "d" represents, independently of each other, an integer of from 1 to 6; and A and B represent, independently of each other, an Rf² group or a group represented by the following formula (2), wherein Rf² is selected from the group consisting of F, H, and a monovalent fluorinated group having a -CF₃ or -CF₂H group at the terminal, 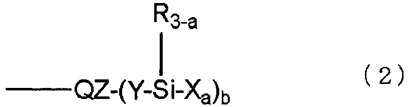 wherein Q represents a divalent organic group, Z represents a divalent to heptavalent linking group having a silalkylene structure or a silarylene structure but no siloxane bond, R represents an alkyl group having 1 to 4 carbon atoms or a phenyl group, X represents a hydrolyzable group, Y is a linking group represented by C_{c}H_{2c} or C₂H₄-Cᵣf₂ᵣ-C₂H₄, "a" represents 2 or 3, "b" represents an integer of from 1 to 6, "c" represents an integer of from 1 to 10, "r" represents an integer of from 1 to 6; wherein of the Rf² group accounts for 30 to 75 mole%, relative to a total of all of the terminal groups in the composition, and provides a surface treatment agent containing the composition and an article treated with the surface treatment agent.

In the aforementioned formula (1), Rf¹ represents a divalent fluorooxyalkylene group having 5 to 100 repeating units represented by -C_{d}F_{2d}O-, wherein "d" represents an integer of from 1 to 6. This group may be linear in view of a low dynamic friction coefficient. Preferably, the fluorooxyalkylene group has 5 to 100, preferably 10 to 80, more preferably 15 to 60 repeating units represented by - C_{d}F_{2d}O-, wherein "d" is, independently of each other, an integer of from 1 to 6, preferably 1 to 4.

Examples of the repeating unit represented by the aforementioned formula, -C_{d}F_{2d}O-, include the following units. Rf¹ may comprise a single kind of unit or a combination of two or more kinds of units. The two or more kinds of repeating units may be sequenced at random.
-CF₂O-
-CF₂CF₂O-
-CF₂CF₂CF₂O-
-CF₂CF₂CF₂CF₂O-
-CF₂CF₂CF₂CF₂CF₂O-
-CF₂CF₂CF₂CF₂CF₂CF₂O-

Preferably, Rf¹ which comprises the aforementioned repeating units is selected from groups represented by the following formula (3) or (4),

-CₑF₂ₑ (CF₂CF₂CF₂O)ₚCₑF₂ₑ- (3)

wherein "p" represents an integer of from 5 to 100 and "e" represents an integer of from 1 to 3,

-CₑF₂ₑ (OC₂F₄)_{f} (OCF₂)_{g}OCF₂- (4)

wherein "f" represents an integer of from 0 to 80, "g" represents an integer of from 0 to 80, a total of "f" and "g" is from 5 to 100, and "e" represents an integer of from 1 to 3, and these repeating units may be sequenced at random. Preferably, a total of "f" and "g" is 10 to 80, more preferably 15 to 60. If the total of "f" and "g" is larger than 80, the adhesiveness and the curability may be poor. If the total of "f" and "g" is less than 10, the properties of the fluorooxyalkylene group cannot be provided sufficiently.

Among these groups, preferred is a group represented by the following formula (5) in view of a low dynamic friction coefficient,

-CF₂ (OC₂F₄)_{f} (OCF₂)_{g}OCF₂- (5)

wherein, "f" represents an integer of from 0 to 80, "g" represents an integer of from 1 to 80, a total of "f" and "g" is from 5 to 100, and these repeating units may be sequenced at random.

In the aforementioned formula (1), A and B represent, independently of each other, the Rf² group or a group represented by the following formula (2), 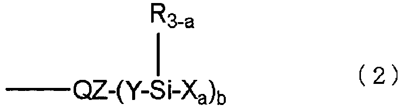 wherein Rf² is selected from F, H and a monovalent fluorinated group having a -CF₃ or -CF₂H group at the terminal, and preferably a perfluoro group.

In the aforementioned formula (2), X represents, independently of each other, a hydrolyzable group. Examples of X include alkoxy groups having 1 to 10 carbon atoms such as methoxy, ethoxy, propoxy and butoxy; oxyalkoxy groups having 2 to 10 carbon atoms such as methoxymethoxy and methoxyethoxy groups; acyloxy groups having 1 to 10 carbon atoms such as an acetoxy group; alkenyloxy groups having 2 to 10 carbon atoms such as an isopropenoxy group; and halogen groups such as chloro group, bromo group, and iodo group. Among these groups, methoxy, ethoxy, isopropenoxy groups and a chlorine atom are preferred.

In the aforementioned formula (2), R represents an alkyl group having 1 to 4 carbon atoms such as methyl and ethyl groups, and a phenyl group. Among these groups, preferred is a methyl group. "a" represents 2 or 3, preferably 3 in view of reactivity and adhesiveness to a substrate. "b" represents an integer of from 1 to 6, preferably 1 to 3.

In the aforementioned formula (2), Y is a linking group represented by C_{c}H_{2c} or C₂H₄-CᵣF₂ᵣ-C₂H₄, and "c" represents an integer of from 1 to 10, preferably 2 to 8. "r" represents an integer of from 1 to 6, preferably 4 to 6.

In the aforementioned formula (2), Q represents a linking group to connect Rf¹ with Z group. Preferred is a hydrocarbon group having 2 to 12 carbon atoms which may have one or more bonds selected from the group consisting of an amide bond, an ether bond, an ester bond and a vinyl bond, examples of Q include the following:
-CH₂OCH₂CH₂CH₂-
-CF₂OCH₂CH₂CH₂-

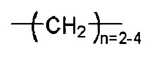

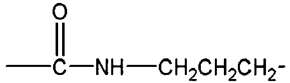

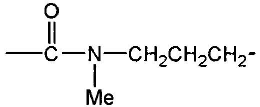

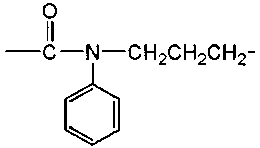

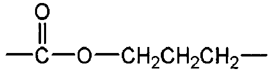

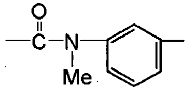

In the aforementioned formula (2), Z represents a divalent to heptavalent linking group having a silalkylene structure in which 2 silicon atoms are bonded via an alkylene group (Si-(CH₂)ₙ-Si) or a silarylene structure in which 2 silicon atoms are bonded via an arylene group (Si-AR-Si) and having no siloxane bond. The present fluorooxyalkylene group-containing polymer composition can provide a coating which has excellent attrition resistance, abrasion resistance and alkaline resistance, using the linking group Z in a molecule.

Preferably, the silalkylene structure of the linking group Z has an alkylene group having 2 to 9 carbon atoms, preferably 2 to 4 carbon atoms. Also, an arylene group in a silarylene structure is preferably phenylene group. Examples of Z include the following:

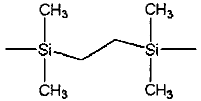

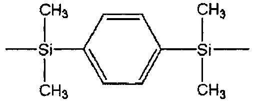

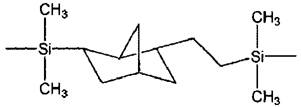

The present fluorooxyalkylene group-containing polymer composition is a fluorooxyalkylene group-containing polymer composition represented by the above average composition formula (1), comprising a one-terminal modified polymer and a both-terminal modified polymer. Here, a hydrolyzable silyl group is a silyl group having a hydrolyzable group X which is directly linked to a silicon atom represented by the above formula (2) to produce a silanol group by reaction with water.

A coating obtained by curing the fluorooxyalkylene group-containing polymer composition of the present invention can adhere strongly to a substrate by the hydrolyzable silyl group via a linking group and is excellent in abrasion resistance. Since the above linking group can provide a coating that is excellent in alkaline resistance from no siloxane structure contained. The present fluorooxyalkylene group-containing polymer composition comprises a one-terminal modified polymer and a both-terminal modified polymer. A degree of steric freedom of the one-terminal modified polymer is larger than that of the both-terminal modified polymer, and contributes to lubricity of the surface. The fluorine atoms in the polymer tend to orient toward a surface of the coating to provide better water- and oil-repellency and releasing property.

The present fluorooxyalkylene group-containing polymer composition can provide a cured coating which has excellent adhesiveness to a substrate, water- and oil-repellency, low dynamic friction coefficient, good property of wiping off stain, good abrasion resistance and alkaline resistance. Therefore, the present composition can be used for a long period for various coating applications. Also, the coating has excellent property of wiping off stain, so that the present composition can be used suitable for a coating for lenses of spectacles, anti-reflection coating, polarization plates, television sets, touch panel displays, mobile phones, accessories and precision molds.

The fluorooxyalkylene group-containing polymer composition having a -CF₃ group at the terminal can be prepared by the following process.

First, a terminal of a perfluoroxy compound having carboxylic functions at the both terminals is partially fluorinated to obtain the following mixture of polymers. A conversion to the terminal -CF₃ group can be controlled by adjusting the amount of the fluorine gas supplied to control the fluorination. Polymers having carboxylic functions may be absorbed on an acid absorbent to be separated, and a ratio of the one-terminal polymer and the both-terminal polymer can be determined according to ¹⁹F-NMR and ¹_{H}-NMR analysis, 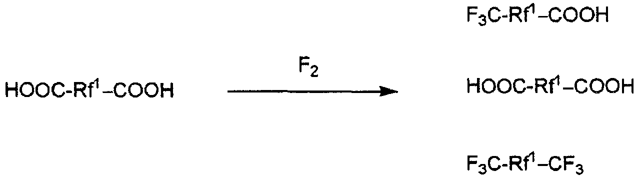 wherein Rf¹ represents defined as above, it is the same as follows.

Subsequently, the terminal carboxylic function remaining in the polymer mixture is reduced with sodium bis(2-methoxyethoxy)aluminum hydride or in a catalytic hydrogenation to obtain the following mixture of polymers.

F₃C-Rf¹-CH₂OH

HOCH₂-Rf¹-CH₂OH

F₃C-Rf¹-CF₃

Then, a compound having an unsaturated terminal radical is reacted with in the terminal hydroxyl group of the perfluorooxyalkylene group-containing polymer according to a conventional method. For example, the aforementioned polymer mixture is reacted with allyl bromide in the presence of tetrabutylammonium hydrogen sulfate, to which sodium hydroxide solution is then added dropwise to make it alkaline to thereby obtain the following mixture of polymers.

F₃C-Rf¹-CH₂OCH₂CH=CH₂

H₂C=CHCH₂OCH₂-Rf¹-CH₂OCH₂CH=CH₂

F₃C-Rf¹-CF₃

Subsequently, the aforementioned perfluorooxyalkylene group-containing polymers are reacted with a silalkylene compound having an SiH bond at both terminals or a silarylene compound, such as 1,4-bis(dimethylsilyl)benzene, and then with a vinyl trimethoxysilane (VMS) to obtain the following mixture of polymers. The addition reaction can be carried out in the presence of an addition reaction catalyst, such as a platinum compound, according to any conventional method.

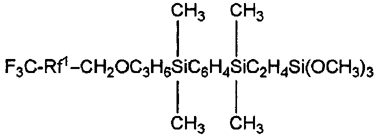

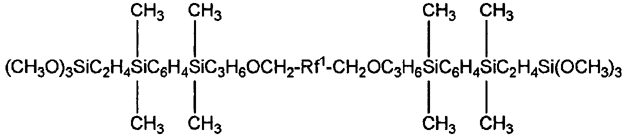

F₃C-Rf¹-CF₃

Alternatively, the fluorooxyalkylene group-containing polymers which have the -CF₂H group at the terminal can be prepared by the following process. First, terminal carboxyl groups at both terminals of the fluorooxyalkylene-containing polymer are converted to hydroxyl groups by reduction with sodium bis(2-methoxyethoxy)aluminum hydride or by catalytic hydrogenation with a noble metal catalyst to obtain the following mixture of polymers. A desired conversion to the terminal hydroxyl groups can be obtained by adjusting the amount of sodium bis(2-methoxyethoxy)aluminum hydride supplied or the like.

HOOC-Rf¹-CH₂OH

HOCH₂-Rf¹-CH₂OH

HOOC-Rf¹-COOH

The hydroxyl groups of the aforementioned mixture is reacted with allyl bromide in the presence of tetrabutylammonium hydrogen sulfate, and then the mixture is made alkaline to convert the terminal hydroxyl groups into aryl ether groups; and -CF₂COOH groups into -CF₂H groups, resulting in the following mixture of polymers.

HF₂C-Rf¹-CH₂OCH₂CH=CH₂

H₂C=CHCH₂OCH₂-Rf¹-CH₂OCH₂CH=CH₂

HF₂C-Rf¹-CF₂H

The aforementioned fluorooxyalkylene group-containing polymers are additionally reacted with a silalkylene compound having an SiH bond at both terminals or a silarylene compound, such as 1,4-bis (dimethylsilyl)benzene, and then with a vinyl trimethoxysilane (VMS) to obtain the following mixture of polymers. The addition reaction can be carried out according to any conventional method, preferably in the presence of an addition reaction catalyst, such as a platinum compound.

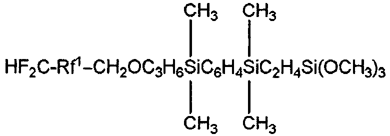

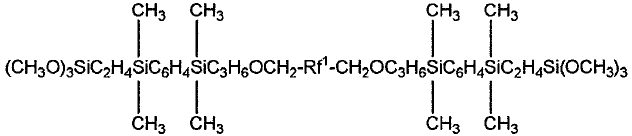

HF₂C-Rf¹-CF₂H

In the present fluorooxyalkylene group-containing polymer composition has the terminal Rf² group accounts preferably for 30 to 75 mole%, more preferably 40 to 70 mole%, relative to a total moles of all of the terminal groups (incl. the number of later-mentioned non-functionalized fluorooxyalkylene group-containing polymers). If the mole percentage exceeds the aforementioned upper limit, the number of the hydrolyzable groups which can react with a substrate is small, so that the adhesiveness is poor. If the mole percentage is less than the aforementioned lower limit, the properties of the both-terminal modified polymer is dominating, so that a low dynamic friction coefficient, good releasing property, and high water- and oil-repellency cannot be obtained.

The present fluorooxyalkylene group-containing polymer composition preferably comprises 40 mole% or more, more preferably 55 to 100 mole%, of the one-terminal modified polymer, and 0 to 60 mole%, more preferably under 45 mole%, of the both-terminal modified polymer, relative to the total moles of the one-terminal modified polymer and the both-terminal modified polymer in the composition. If the amount of the both-terminal modified polymer is over 60 mole%, the properties of the both-terminal modified polymer are dominating, so that a low dynamic friction coefficient, good releasing property, and high water- and oil-repellency cannot be obtained.

The present fluorooxyalkylene group-containing polymer composition may further comprise a fluorooxyalkylene group-containing polymer whose terminals are not functionalized. The amount of non-functionalized fluorooxyalkylene group-containing polymer is preferably 13 to 125 mole%, preferably 18 to 95 mole%, relative to the total moles of the one-terminal modified polymer and the both-terminal modified polymer.

The present invention provides a surface treatment agent comprising the present fluorooxyalkylene group-containing polymer composition and/or a fluorooxyalkylene group-containing polymer composition comprising a condensate of a hydrolyzate which can be obtained by subjecting part of the terminal hydrolysable group(s) of the fluorooxyalkylene group-containing polymer composition to hydrolysis as an active ingredient.

Accordingly, the surface treatment agent may be a partially hydrolyzed condensate obtained by partially hydrolyzing and condensing the terminal hydrolyzable group of the aforementioned fluorooxyalkylene group-containing polymer composition according to any conventional method as an active ingredient.

The present surface treatment agent may contain a catalyst for hydrolysis and condensation reactions. Examples of the catalyst include organic tin compounds such as dibutyltin dimethoxide, dibutyltin dilaurate; organic titanium compounds such as tetra-n-butyl titanate; organic acids such as acetic acid, methanesulfonic acid and fluorinated carboxylic acid; and inorganic acids such as hydrochloric acid and sulfuric acid. Among these acids, preferred are acetic acid, tetra-n-butyl titanate, dibutyltin dilaurate and fluorinated carboxylic acid. A content of the catalyst may be a catalytic amount, which ranges typically from 0.01 to 5 parts by mass, particularly 0.1 to 1 part by mass, per 100 parts by mass of the fluorooxyalkylene group-containing polymer and/or the condensate of a hydrolyzate obtained by partially hydrolyzing the polymer composition.

The surface treatment agent may contain a solvent. Examples of the solvent include fluorinated aliphatic hydrocarbon solvents such as perfluoroheptane and perfluorooctane; fluorinated aromatic hydrocarbon solvents such as m-xylenehexafluoride, benzotrifluoride and 1,3-trifluoromethyl benzene; fluorinated ether solvents such as methyl perfluorobutyl ether, ethyl perfluorobutyl ether, perfluoro(2-butyltetrahydrofuran); fluorinated alkylamine solvents such as perfluorotributylamine and perfluorotripentylamine; hydrocarbon solvents such as petroleum benzene, mineral spirits, toluene, and xylene; ketone solvents such as acetone, methylethylketone, and methylisobutylketone. Among these solvents, fluorinated solvents are preferred in view of solubility and wettability of the composition. Particularly preferred are m-xylenehexafluoride, perfluoro(2-butyltetrahydrofuran), perfluorotributylamine and ethyl perfluorobutyl ether.

A mixture of two or more of the aforementioned solvents may be used. Preferably, the fluorooxyalkylene group-containing polymer and the condensate of the hydrolyzate obtained by partially hydrolyzing the polymer composition are dissolved homogeneously. An optimum concentration of the fluorooxyalkylene group-containing polymer composition in a solvent may be decided, depending on treatment conditions, and is preferably from 0.01 to 10 parts per mass, particularly from 0.05 to 5 parts per mass.

The surface treatment agent may be applied to a substrate by any known methods, such as brushing, dipping, spraying and vapor deposition. The composition may be cured at a temperature selected depending on a curing method. When the composition is applied by brushing or dipping, a cured temperature is preferably from room temperature to 80°C. The curing is carried out preferably in a humid environment to promote the curing reaction. A thickness of a cured coating may be selected depending on the type of a substrate, and is preferably from 0.1 to 100nm, particularly from 1 to 20nm.

A substrate to be treated with the present surface treatment agent may be various substrates, such as paper, cloths, metals and metal oxides, glass, plastics, ceramics and quartz, but is not limited to these. The present composition can provide water- and oil-repellency, releasing property, low dynamic friction coefficient or stain resistance to these substrates.

Examples of an article to be treated and treatment with the present surface treatment agent include the following: coating for preventing fingerprints or sebum from adhering to optical articles such as navigation equipment, mobile phones, digital cameras, digital camcorders, PDAs', portable audio players, car audio devices, game machines, lenses of spectacles, lenses of cameras, filters for lenses, dark glasses, medical devices such as gastric cameras, copy machines, personal computers, liquid crystal displays, organic EL displays, plasma displays, touch panel displays, protection films, and anti-reflection films; water-repellent and stainproof coatings for sanitary products such as bathtubs and washbasins; stainproof coatings for window glass of automobiles, trains and airplanes, and head lamp covers; water-repellent and stainproof coatings for building materials for exterior wall; grease buildup-preventing coatings for kitchen building materials; water repellent, stainproof, bill-, poster- and graffiti-preventing coatings for telephone booths; coatings for water repellency and fingerprint prevention on artworks; coatings for preventing fingerprint on compact discs and DVDs'; release agents for nanoimprint molds; and for modifying flowability and dispersibility of paint additives, resin modifying agents, and inorganic fillers, or improving a lubrication property of tapes and films.

### Examples

The present invention will be described in detail by reference to the Examples and the Comparative Examples, but shall not be limited thereto.

The mixture of polymers represented by the following formulas (6a), (6b) or (6c) was prepared by partially fluorinating the perfluoroxy compound having carboxylic function at both terminals, C4000 from Solvay Solexis Inc., with a fluorine gas. The polymers having a carboxylic function(s) were absorbed to an acid absorbent and separated to determine a ratio of the polymers according to ¹⁹F-NMR analysis.

F₃C(OC₂F₄)ₚ(OCF₂)_{q}-OCF₂COOH (6a)

HOOC-CF₂-(OC₂F₄)ₚ(OCF₂)_{q}-OCF₂COOH (6b)

F₃C(OC₂F₄)ₚ(OCF₂)_{q}-OCF₃ (6_{c})

(p/q=0.9, p | q ≈ 45)

### [Example 1]

In a reactor, placed and dissolved were 75g of the aforementioned mixture consisting of 60 mole% of (6a), 2 mole% of (6b) and 38 mole% of (6c), represented by above formulas, wherein the molar ratio of the terminal -CF₃ group was 68 mole%, relative to the total moles of the terminal groups in the mixture, and a mixed solvent of 50 g of 1,3-Bis trifluoromethyl benzene and 15 g of tetrahydrofuran. 38 g of a 40% solution of sodium bis (2-methoxyethoxy) aluminum hydride in toluene was added dropwise into the mixture and stirred at room temperature for 3 hours, to which an appropriate amount of hydrochloric acid was added, and sufficiently stirred, and then washed with water. The lower phase was taken out and the solvent was distilled off, and part of the mixture of the product (mainly (6c) component) was distilled off under reduced pressure to obtain 40 g of a liquid product. According to ¹⁹F-NMR analysis, the product obtained was a mixture of the compounds represented by the following formulas (7a), (7b) and (7c), and the molar ratio of the terminal -CF₃ group was 65 mole%, relative to the total moles of the terminal groups.

F₃C(OC₂F₄)ₚ(OCF₂)_{q-}OCF₂CH₂OH (7a)

HOH₂C-CF₂-(OC₂F₄)ₚ(OCF₂)_{q}-OCF₂CH₂OH (7b)

F₃C(OC₂F₄)ₚ(OCF₂)_{q}-OCF₃ (7c)

(p/q=0. 9, p-q ≈ 45)

In a reactor, 40 g of the aforementioned mixture of the compounds of (7a), (7b) and (7c), 3.5 g of allyl bromide and 0.4 g of tetrabutylammonium hydrogen sulfate were placed and stirred at 50°C for 3 hours. 5.2 g of an aqueous 30% sodium hydroxide solution was added dropwise and aged at 55°C for 12 hours. Then, an appropriate amount of fluorinated solvent, PF 5060 from 3M Ltd., and hydrochloric acid were added and stirred, and then sufficiently washed with water. The lower phase was taken out and the solvent was distilled off to obtain 30 g of a liquid product. According to ¹⁹F-NMR and ¹H-NMR analysis, the product obtained was a mixture of the compounds represented by the following formulas (8a), (8b) and (8c), and the molar ratio of the terminal -CF₃ group was 65 mole%, relative to the total moles of the terminal groups.

F₃C(OC₂F₄)ₚ(OCF₂)_{q} OCF₂CH₂OCH₂CH=CH₂ (8a)

H₂C=CHCH₂OCH₂-CF₂-(OC₂F₄)ₚ(OCF₂)_{q}-OCF₂CH₂OCH₂CH=CH₂ (8b)

F₃C(OC₂F₄)ₚ(OCF₂)_{q}-OCF₃ (8c)

(p/q=0.9, p+q ≈ 45)

Subsequently, in a reactor, 20 g of aforementioned mixture of the compounds of (8a), (8b) and (8c), 30 g of 1,3-Bis trifluoromethyl benzene, 3.8g of 1,2-Bis(dimethylsilyl)ethane, 0.005 g of a solution of a chloroplatinic acid/vinyl siloxane complex in toluene (containing 1.25 × 10⁻⁹ mole of Pt) were mixed and aged at 80°C for 3 hours. Then, the solvent and unreacted compounds were distilled off under reduced pressure to obtain 18 g of liquid product 18 g. The product obtained was a mixture of the compounds represented by the following formulas (9a), (9b) and (9c).

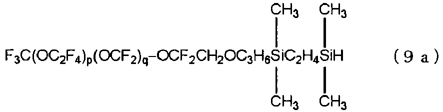

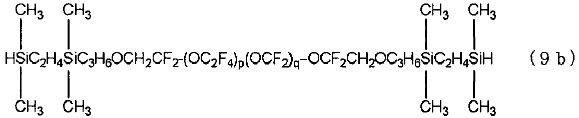

F₃C(OC₂F₄)ₚ(OCF₂)_{q}-OCF₃ (9c)

(p/q=0.9, p+q≈45)

In a reactor, 17 g of the aforementioned mixture of the compounds (9a), (9b) and (9c), 17 g of 1,3 trifluoromethyl benzene, 0.7 g of vinyl trimethoxysilane (VMS) and 0.005 g of a solution of a chloroplatinic acid/vinyl siloxane complex in toluene (containing 1.25 × 10⁻⁹ mole of Pt) were mixed and aged at 80°C for 3 hours. Then, the solvent and unreacted compounds were distilled off under reduced pressure to obtain 14 g of a liquid product.

The ¹H-NMR data of the product obtained is shown below (reference: TMS, ppm).

| | |
|---|---|
| 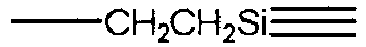 | 0.43 to 0.73ppm, 1. 60 to 1.73ppm |
| 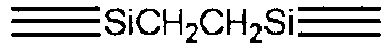 | 0.43 to 0. 73ppm |
| -SiOCH₃ | 3.41 to 3.68ppm |
| -CH₂CH₂- | 3. 41 to 3.85ppm |
| 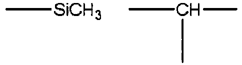 | 0.00 to 00.22ppm |

The product obtained was a mixture of the compounds of (10a), (10b) and (10c) represented by the following formulas, and the molar ratio of the terminal -CF₃ group was 65 mole%, relative to the total moles of the terminal groups (Composition 1).

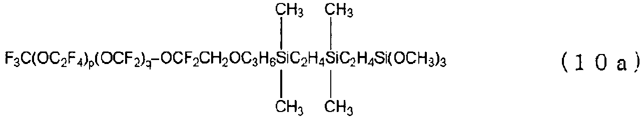

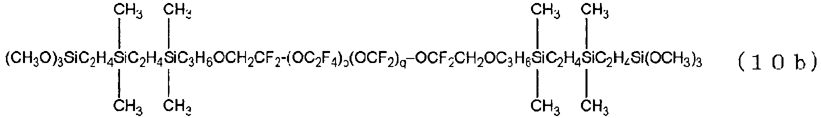

F₃C(OC₂F₄)ₚ(OCF₂)_{q}-OCF₃ (10c)

(p/q=0.9, p+q ≈ 45)

### [Example 2]

In a reactor, 40 g of the aforementioned mixture of the compounds of (8a), (8b) and (8c), 140 g of 1,3 trifluoromethyl benzene, 20 g of 1,4-Bis (dimethylsilyl)benzene and 0.01 g of a solution of a chloroplatinic acid/vinyl siloxane complex in toluene (containing 2.5 × 10⁻⁹ mole of Pt) were mixed and aged at 80°C for 3 hours. After the solvent was distilled off under reduced pressure, a separated polymer layer (lower phase) was collected and washed with acetone, and concentrated under reduced pressure to obtain a 30 g of a liquid product. The product obtained was a mixture of the compounds represented by the following formulas (11a), (11b) and (11c).

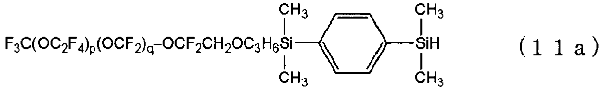

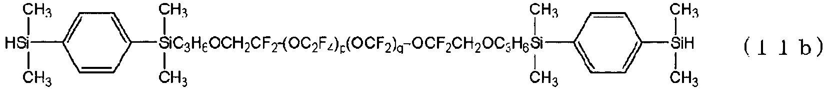

F₃C(OC₂F₄)ₚ(OCF₂)q-OCF₃ (11c)

(p/q=0.9, p+q≈45)

In a reactor, 25 g of the aforementioned mixture of the compounds of (11a), (11b) and (11c), 25 g of 1,3 trifluoromethyl benzene, 1.1 g of vinyl trimethoxysilane (VMS) and 0.01 g of a solution of a chloroplatinic acid/vinylsiloxane complex in toluene (containing 2.5 × 10⁻⁹ mole of Pt) were mixed and aged at 80°C for 3 hours. Then, the solvent and unreacted compounds were distilled off under reduced pressure to obtain 21.7 g of a liquid product.

The ¹H-NMR data of the product obtained is shown below (reference: TMS, ppm).

| | |
|---|---|
| 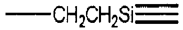 | 0. 50 ∞ 0.89ppm. 1. 58 to 1.71ppm |
| -SiOCH₃ | 3.42 to 3.60 ppm |
| -CH₂OCH₂- | 3.42 to 3.76ppm |
| 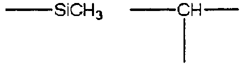 | 0.18 to 0.40ppm |
| 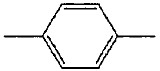 | 7.43 to 7.60 ppm |

The product obtained was a mixture of the compounds of (12a), (12b) and (12c) represented by the following formulas, and the molar ratio of the terminal -CF₃ group was 65 mole%, relative to the total moles of the terminal groups (Composition 2).

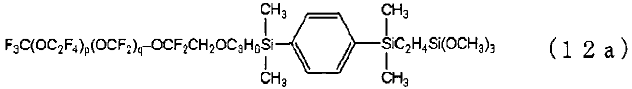

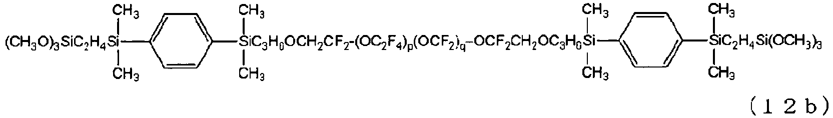

F₃C(OC₂F₄)ₚ(OCF₂)_{q}-OCF₃ (12c)

(p/q=0.9, p+q≈45)

### [Example 3]

Preparation was performed by repeating the procedures in Example 1, except that 7-octenyl trimethoxysilane 1.1 g was used, instead of vinyl trimethoxysilane 0.7 g in Example 1. The product obtained was a mixture of the compounds of (13a), (13b) and (13c) represented by the following formulas, and the molar ratio of the terminal - CF₃ group was 65 mole%, relative to the total moles of the terminal groups (Composition 3).

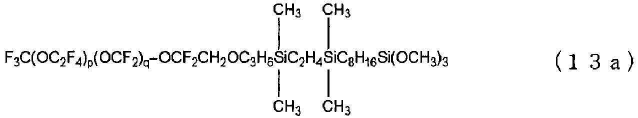

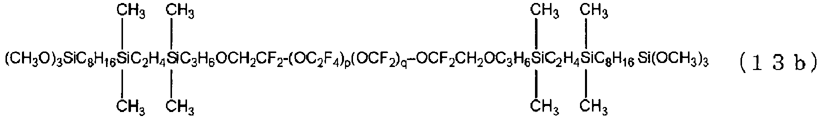

F₃C(OC₂F₄)ₚ(OCF₂)_{q}-OCF₃ (13c)

(p/q=0.9, p+q≈45)

### [Example 4]

Preparation was performed by repeating the procedures in Example 2, except that 7-octenyl trimethoxysilane 1.7 g was used, instead of vinyl trimethoxysilane 1.1 g in Example 2. The product obtained was a mixture of the compounds of (14a), (14b) and (14c) represented by the following formulas, and the molar ratio of the terminal - CF₃ group was 65 mole%, relative to the total moles of the terminal groups (Composition 4).

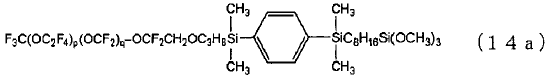

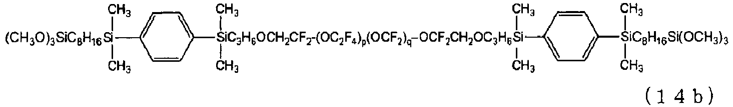

F₃C(OC₂F₄)ₚ(OCF₂)_{q}-OCF₃ (14c)

(p/q=0.9, p+q≈45)

### [Example 5]

Preparation was performed by repeating the procedures in Example 2, except that silane represented by CH₂=CH-C₄F₈-C₂H₄-Si (OCH₃)₃ 2.8 g was used, instead of vinyl trimethoxysilane 1.1 g in Example 2. The product obtained was a mixture of the compounds of (15a), (15b) and (15c) represented by the following formulas, and the molar ratio of the terminal -CF₃ group was 65 mole%, relative to the total moles of the terminal groups (Composition 5).

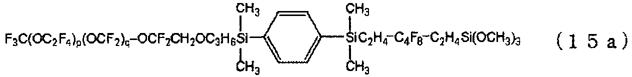

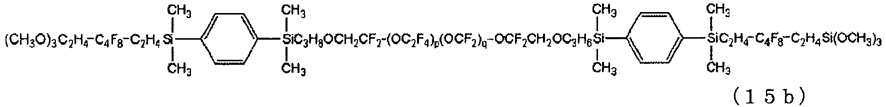

F₃C(OC₂F₄)ₚ(OCF₂)_{q}-OCF₃ (15c)

(p/q=0.9, p+q≈45)

### [Example 6]

Preparation was performed by repeating the procedures in Example 2, except that silane represented by CH₂=CH-C₆F₁₂-C₂H₄-Si (OCH₃)₃ 3.5 g was used, instead of vinyl trimethoxysilane 1.1g in Example 2. The product obtained was a mixture of the compounds of (16a), (16b) and (16c) represented by the following formulas, and the molar ratio of the terminal -CF₃ group was 65 mole%, relative to the total moles of the terminal groups (Composition 6).

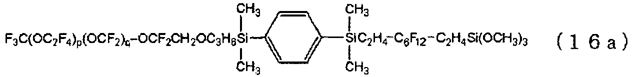

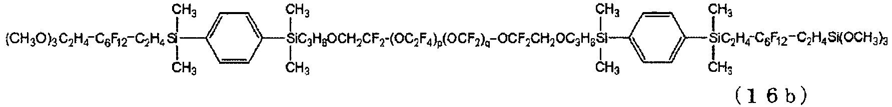

F₃C(OC₂F₄)ₚ(OCF₂)_{q}-OCF₃ (16c)

(p/q=0.9, p+q≈45)

### Preparation of Surface Treatment Agents and Cured Coatings

The perfluorooxyalkylene group-containing polymer composition obtained in the Examples 1 to 6, respectively, were dissolved in a fluorinated solvent, Novec 7200 from 3M Ltd., in a 0.3wt% concentration to obtain surface treatment agents. Each surface treatment agent was dip-coated on glass slides and films on whose surface SiO₂ was vacuum deposited for 30 seconds with a pulling-up rate of 150 mm/min, and left at 40°C and an 80% humidity for 24 hours to form a cured coating. As for the surface treated films obtained, a contact angle and a dynamic friction coefficient were determined, followed by an adhesiveness test. Further, the glass slides obtained were subjected to a contact angle, a dynamic friction coefficient, releasing property test, an abrasion resistance test and an alkaline resistance test.

Surface treatment agent and cured coatings of Comparative Example 1 to 5 were prepared and evaluated by repeating the procedures in the Examples, except that the compositions 7 to 11 indicated below were used, instead of compositions 1 to 6.

### [Comparative Example 1]

The product obtained was a mixture of the compounds of (17a), (17b) and (17c) represented by the following formulas, having no siloxane linking group whose molar ratio of the terminal CF₃ group was 65 mole%, relative to the total moles of the terminal groups (Composition 7).

F₃C(OC₂F₄)ₚ(OCF₂)_{q}-OCF₂CH₂OC₃H₆Si(OCH₃)₃ (17a)

(CH₃O)₃SiC₃H₆OCH₂CF₂-(OC₂F₄)ₚ(OCF₂)_{q}-OCF₂CH₂OC₃H₆Si(OCH₃)₃ (17b)

F₃C(OC₂F₄)ₚ(OCF₂)_{q}-OCF₃ (17c)

(p/q=0.9, p+q≈45)

### [Comparative Example 2]

The product obtained was a mixture of the compounds of (18a), (18b) and (18c) represented by the following formulas, having a linear siloxane linking group whose molar ratio of the terminal -CF₃ group was 50 mole%, relative to the total moles of the terminal groups (Composition 8).

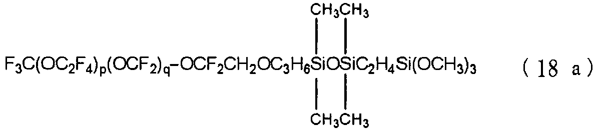

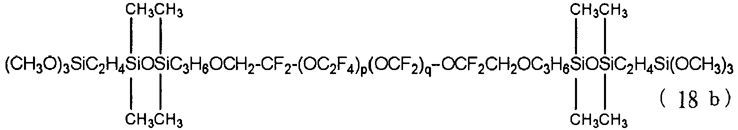

F₃C(OC₂F₄)ₚ(OCF₂)_{q}-OCF₃ (18c)

(p/Q=0.9, p+Q≈45)

### [Comparative Example 3]

The product obtained was a mixture of the compounds of (19a), (19b) and (19c) represented by the following formulas, having a branched siloxane linking group whose molar ratio of the terminal -CF₃ group was 50 mole%, relative to the total moles of the terminal groups (Composition 9).

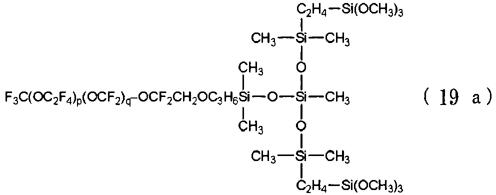

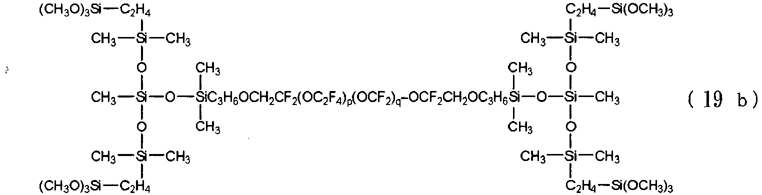

F₃C(OC₂F₄)ₚ(OCF₂)_{q}-OCF₃ (19 c)

(p/q=0.9, p+q≈45)

### [Comparative Example 4]

The product obtained was a both-terminal modified polymer represented by the following formula, having no siloxane linking group, and the molar ratio of the terminal -CF₃ group was 0 mole%, relative to the total moles of the terminal groups (Composition 10).

(CH₃O)₃SiC₃H₆OCH₂CF₂-(OC₂F₄)ₚ(OCF₂)_{q}-OCF₂CH₂OC₃H₆Si(OCH₃)₃ (20)

(p/q**=**0.9, p+q≈45)

### [Comparative Example 5]

The product obtained was a both-terminal modified polymer represented by the following formula, having a linear siloxane linking group, and the molar ratio of the terminal -CF₃ group was 0 mole%, relative to the total moles of the terminal groups (Composition 11). 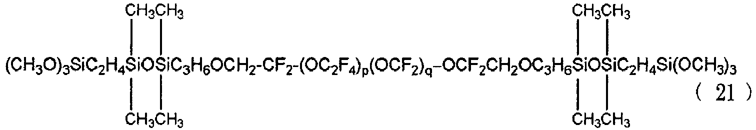 (p/q=0.9, p+q ≈ 45)

The cured coatings obtained were evaluated in the following method.

### [Evaluation of Water- and Oil-repellency]

Using the films and glass slides prepared above, and a contact angle meter, Drop Master from Kyowa Interface Science Co., Ltd., a water contact angle and an oleic acid contact angle of the cured coatings were measured.

### [Measurement of Dynamic Friction Coefficient]

Using the films and glass slides prepared above, the dynamic friction coefficient against a Bemcot non-woven cloth from Asahi Kasei was measured under the following conditions with a surface property test machine, 14FW from Shinto Scientific Co., Ltd.
Contact area: 10 mm × 30 mm
Load: 100 g

### [Evaluation of Releasing Property]

Using the glass slides prepared above, the releasing property was measured under the following conditions with an autograph, AG-IS from Shimadzu Co., Ltd.

Treatment with an adhesive (an adhesive tape was stuck to a test piece): Nitto NO.31B, 19 mm in width, Bonding
pressure: load of 20 g/cm²
Aging: 25°C/24 hours
Peeling speed: 300 mm/min, angle of 180 degrees

### [Evaluation of a Property of Wiping Off Marking Ink]

Using the films prepared above, a surface of the cured coating was painted with a permanent marker, High Macky from Zebra Co., Ltd. Using a rubbing tester from Shinto Scientific Co., Ltd., the surface after wiped off under the following conditions was visually observed to evaluate on the following criteria:
Test environment: 25°C, relative humidity of 40% Scrubbing material: Tissue paper, Ellemoi from Kamishoji Co., Ltd., fixed on a tip of a tester whose top contacts with the cured coating
Scrub distance (one way): 20 mm
Scrub speed: 1800 mm/min
Contact area: 10 mm × 30 mm
Load: 500 g
+++: all of the marking ink was wiped off easily at one time,
++: a little marking ink remained after one time wiping,
+: almost a half of the marking ink remained after one time wiping, and
-: the marking ink could not be wiped off at all.

### [Evaluation of Scrub Resistance]

Using the glass slides prepared above, a water contact angle and a property of wiping off marking ink of a cured coating after scrubbing under the following conditions with a rubbing tester from Shinto Scientific Co., Ltd. were evaluated. The results are shown in Table 2.
Test environment: 25°C, relative humidity of 40%
Scrubbing material: A steel wool, BONSTAR #0000 from Nihon Steel Wool Co., Ltd., fixed on a tip of a tester whose top contacts with the cured coating
Scrub distance (one way): 20 mm
Scrub speed: 1800 mm/min
Contact area: 1 cm²
Load: 1 kg
Number of scrubbing times: 1000 times

### [Evaluation of Adhesiveness]

Using the films prepared above, a water contact angle and a property of wiping off marking ink of a cured coating after scrubbing under the following conditions with a rubbing tester from Shinto Scientific Co., Ltd. were evaluated. The results are shown in Table 2.
Test environment: 25°C, relative humidity of 40%
Scrubbing material: A Bemcot non-woven cloth from Asahi Kasei, fixed on a tip of a tester whose top contacts with the cured coating
Scrub distance (one way): 20 mm
Scrub speed: 6000 mm/min
Contact area: 10 mm × 30 mm
Load: 1.5 kg
Number of scrubbing times: 2000 times

### [Evaluation of Alkaline Resistance]

Using the glass slides prepared above, a water contact angle and a property of wiping off marking ink of a cured coating, after the cured coating was dipped in a 10% NaOH aqueous solution for 10 minutes and the surface was washed with water and dried, were evaluated.

The results are shown in Tables 1 (initial performance) and 2 (abrasion resistance, adhesiveness and alkaline resistance as a durability index).

**[Table 1]**

| | Water repellency | | Oil repellency | | Dynamic friction coefficient | | Releasing property (N/18mm) | Property of wiping off marking ink |
|---|---|---|---|---|---|---|---|---|
| | Water contact angle (°) | | Oleic acid contact angle (°) | | | | | |
| | film | glass | film | glass | film | glass | | |
| Example 1 | 113 | 115 | 69 | 73 | 0.11 | 0.04 | 0.05 | +++ |
| Example 2 | 114 | 116 | 72 | 73 | 0.12 | 0.03 | 0.05 | +++ |
| Example 3 | 111 | 114 | 70 | 72 | 0.12 | 0.04 | 0.05 | +++ |
| Example 4 | 112 | 113 | 69 | 72 | 0.12 | 0.04 | 0.06 | +++ |
| Example 5 | 114 | 115 | 71 | 74 | 0.11 | 0.04 | 0.04 | +++ |
| Example 6 | 113 | 115 | 71 | 74 | 0.12 | 0.04 | 0.05 | +++ |
| Comparative Example 1 | 113 | 116 | 70 | 74 | 0.12 | 0.03 | 0.04 | +++ |
| Comparative Example 2 | 109 | 114 | 71 | 73 | 0.14 | 0.04 | 0.08 | +++ |
| Comparative Example 3 | 108 | 112 | 69 | 74 | 0.15 | 0.05 | 0.09 | +++ |
| Comparative Example 4 | 109 | 112 | 70 | 72 | 0.14 | 0.05 | 0.12 | +++ |
| Comparative Example 5 | 107 | 110 | 68 | 71 | 0.15 | 0.05 | 0.12 | +++ |

**[Table 2]**

| | Abrasion resistance | | Adhesiveness | | Alkaline resistance | |
|---|---|---|---|---|---|---|
| | Water repellency after friction with steel wool (°) | Property of wiping off marking ink after friction | Water repellency after friction with non-with non-woven cloth woven (°) | Property of wiping off marking ink after friction | Water repellency after alkaline dipping (°) | Property of wiping off marking ink after alkaline dipping |
| Example 1 | 110 | +++ | 110 | +++ | 108 | +++ |
| Example 2 | 108 | +++ | 113 | +++ | 106 | +++ |
| Example 3 | 109 | +++ | 111 | +++ | 110 | +++ |
| Example 4 | 108 | +++ | 112 | +++ | 111 | +++ |
| Example 5 | 108 | +++ | 112 | +++ | 111 | +++ |
| Example 6 | 109 | +++ | 111 | +++ | 110 | +++ |
| Comparative Example 1 | 109 | +++ | 64 | - | 110 | +++ |
| Comparative Example 2 | 105 | +++ | 109 | +++ | 68 | - |
| Comparative Example 3 | 104 | +++ | 106 | +++ | 69 | - |
| Comparative Example 4 | 82 | - | 98 | ++ | 105 | +++ |
| Comparative Example 5 | 82 | - | 105 | +++ | 92 | + |

As shown in the Tables 1 and 2, coatings formed from the perfluorooxyalkylene group-containing polymer compositions of the Examples 1 to 6 can maintain favorable properties even after steel wool friction, non-woven cloth friction and alkaline dipping. On the contrary, in Comparative Example 1, the coating can be easily peeled off by unwoven cloth friction, and in Comparative Examples 2 and 3, the coatings are inferior in water repellency and alkaline resistance. Meanwhile, in Comparative Examples 4 and 5, the coatings are inferior in water repellency, releasing property and abrasion resistance by steel wool friction. Thus, it was found that the present fluorooxyalkylene group-containing polymer composition is excellent in water- and oil-repellency, low dynamic friction coefficient, releasing property and property of wiping off stain, and can provide a cured coating which is excellent in abrasion resistance, adhesiveness to a material and alkaline resistance.

## Claims

1. A fluorooxyalkylene group-containing polymer composition comprising a fluorooxyalkylene group-containing polymer having a hydrolyzable silyl group at one terminal and a fluorooxyalkylene group-containing polymer having hydrolyzable silyl groups at both terminals, wherein the fluorooxyalkylene group-containing polymers are represented by the following formula (1),
A-Rf¹-B (1)
wherein Rf¹ represents a divalent linear fluorooxyalkylene group having 5 to 100 repeating units represented by -C_{d}F_{2d}O-, wherein "d" represents, independently of each other, an integer of from 1 to 6; and A and B represent, independently of each other, an Rf² group or a group represented by the following formula (2), wherein Rf² is selected from the group consisting of F, H and a monovalent fluorinated group having a -CF₃ or -CF₂H group at the terminal, 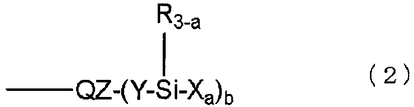 wherein Q represents a divalent organic group, Z represents a divalent to heptavalent linking group having a silalkylene structure in which 2 silicon atoms are bonded via an alkylene group or a silarylene structure in which 2 silicon atoms are bonded via an arylene group and having no siloxane bond, R represents an alkyl group having 1 to 4 carbon atoms or a phenyl group, X represents a hydrolyzable group, Y is a linking group represented by C_{c}H_{2c} or C₂H₄-CᵣF₂ᵣ-C₂H₄, "a" represents 2 or 3, and "b" represents an integer of from 1 to 6, and "c" represents an integer of from 1 to 10, "r" represents an integer of from 1 to 6 ;
wherein of the Rf² group accounts for 30 to 75 mole%, relative to a total of all of the terminal groups in the composition.

2. The fluorooxyalkylene group-containing polymer composition according to claim 1, wherein the composition comprises 40 to 100 mole% of the fluorooxyalkylene group-containing polymer having a hydrolyzable silyl group at one terminal, and 0 to 60 mole% of the fluorooxyalkylene group-containing polymer having hydrolyzable silyl groups at both terminals, relative to a total of the moles of the one-terminal modified polymer and the both-terminal modified polymer.

3. The fluorooxyalkylene group-containing polymer composition according to any one of claims 1 and 2, wherein Rf¹ is a divalent linear fluorooxyalkylene group represented by the following formula (5),
-CF₂ (OC₂F₄)_{f} (OCF₂)_{g}OCF₂- (5)
wherein "f' represents an integer of from 0 to 80, "g" represents an integer of from 1 to 80, and a total of "f" and "g" is from 5 to 100, and these repeating units may be sequenced at random.

4. The fluorooxyalkylene group-containing polymer composition according to any one of claims 1 to 3, wherein Z is a silethylene group or a silphenylene group.

5. The fluorooxyalkylene group-containing polymer composition according to any one of claims 1 to 4, wherein Q is a hydrocarbon group having 2 to 12 carbon atoms and may have one or more bonds selected from the group consisting of an amide bond, an ether bond, an ester bond and a vinyl bond.

6. The fluorooxyalkylene group-containing polymer composition according to any one of claims 1 to 5, wherein X is a group selected from the group consisting of alkoxy groups, oxyalkoxy groups, acyloxy groups, alkenyloxy groups and halogen groups.

7. A surface treatment agent comprising the fluorooxyalkylene group-containing polymer composition according to any one of claims 1 to 6 and/or a fluorooxyalkylene group-containing polymer composition comprising a condensate of a hydrolyzate obtained by partially hydrolyzing the polymer composition as an active ingredient.

8. An article treated with the surface treatment agent according to claim 7.

9. An optical article treated with the surface treatment agent according to claim 7.

## Patentansprüche

1. Fluoroxyalkylengruppenhaltige Polymerzusammensetzung umfassend ein fluoroxyalkylengruppenhaltiges Polymer mit einer hydrolysierbaren Silyl-Gruppe an einem Ende und einem fluoroxyalkylengruppenhaltigen Polymer mit hydrolysierbaren Silyl-Gruppen an beiden Enden, wobei die fluoroxyalkylengruppenhaltigen Polymere durch die folgende Formel (1) dargestellt sind,
A-Rf¹-8 (1)
wobei Rf¹ eine divalente lineare Fluoroxyalkylengruppe mit 5 bis 100 Wiederholungseinheiten, die durch -C_{d}F_{2d}O- dargestellt ist, darstellt, wobei "d", unabhängig voneinander, eine Ganzzahl von 1 bis 6 darstellt; und A und B unabhängig voneinander eine Rf² Gruppe oder eine Gruppe, die durch die folgende Formel (2) dargestellt ist, darstellen, wobei Rf² ausgewählt ist aus der Gruppe bestehend aus F, H und einer monovalenten fluorinierten Gruppe mit einer -Cf₃ oder -CF₂H Gruppe an dem Ende, 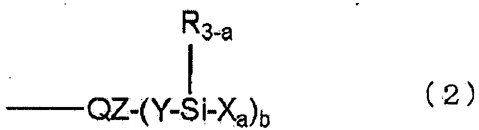 wobei Q eine divalente organische Gruppe darstellt, Z eine divalente bis heptavalente Verknüpfungsgruppe mit einer Silalkylenstruktur, in der 2 Siliziumatome über eine Alkylengruppe verbunden sind oder eine Silarylenstruktur, in der 2 Siliziumatome über eine Arylengruppe verbunden sind und die keine Siloxanbindung aufweist, darstellt, R eine Alkylgruppe mit 1 bis 4 Kohlenstoffatomen oder eine Phenylgruppe darstellt, X eine hydrolysierbare Gruppe darstellt, Y eine Verknüpfungsgruppe ist, die durch C_{c}H_{2c} oder C₂H₄-CᵣF₂r-C₂H₄ dargestellt ist, "a" 2 oder 3 darstellen, und "b" eine Ganzzahl von 1 bis 6 darstellt, und "c" eine Ganzzahl von 1 bis 10 darstellt, "r" eine Ganzzahl von 1 bis 6 darstellt;
wobei die Rf² Gruppe 30 bis 75 Mol%, bezogen auf die Gesamtheit aller Endgruppen in der Zusammensetzung, ausmacht.

2. Fluoroxyalkylengruppenhaltige Polymerzusammensetzung nach Anspruch 1, wobei die Zusammensetzung 40 bis 100 Mol% des fluoroxyalkylengruppenhaltigen Polymers mit einer hydrolysierbaren Gruppe an einem Ende umfasst, und 0 bis 60 Mol% des fluoroxyalkylengruppenhaltigen Polymers mit hydrolysierbaren Silylgruppen an beiden Enden umfasst, bezogen auf die Gesamtheit der Mol des einzel-terminierten modifizierten Polymers und des doppel-terminierten modifizierten Polymers.

3. Fluoroxyalkylengruppenhaltige Polymerzusammensetzung nach einem beliebigen der Ansprüche 1 und 2, wobei Rf¹ eine divalente lineare Fluoroxyalkylengruppe ist, die durch die folgende Formel (5) dargestellt ist,
-CF₂(OC₂F₄)_{f}(OCF₂)_{g}OCF₂- (5)
wobei "f' eine Ganzzahl von 0 bis 80 darstellt, "g" eine Ganzzahl von 1 bis 80 darstellt und eine Gesamtheit von "f" und "g" von 5 bis 100 liegt, und diese Wiederholungseinheiten in Sequenz oder zufällig angeordnet sein können.

4. Fluoroxyalkylengruppenhaltige Polymerzusammensetzung nach einem beliebigen der Ansprüche 1 bis 3, wobei Z eine Silethylengruppe oder eine Silphenylengruppe ist.

5. Fluoroxyalkylengruppenhaltige Polymerzusammensetzung nach einem beliebigen der Ansprüche 1 bis 4, wobei Q eine Kohlenwasserstoffgruppe mit 2 bis 12 Kohlenstoffatomen ist und eine oder mehrere Bindungen aufweisen kann, die aus der Gruppe bestehend aus einer Amidbindung, einer Etherbindung, einer Esterbindung und einer Vinylbindung, ausgewählt ist.

6. Fluoroxyalkylengruppenhaltige Polymerzusammensetzung nach einem beliebigen der Ansprüche 1 bis 5, wobei X eine Gruppe ist, die aus der Gruppe bestehend aus Alkoxygruppen, Oxyalkoxygruppen, Acyloxygruppen, Alkenyloxygruppen und Halogengruppen, ausgewählt ist.

7. Oberflächenbehandlungsmittel, umfassend die fluoroxyalkylengruppenhaltige Polymerzusammensetzung gemäß einem beliebigen der Ansprüche 1 bis 6 und/oder eine fluoroxyalkylengruppenhaltige Polymerzusammensetzung, umfassend ein Kondensat eines Hydrolysats, das durch partielles Hydrolysieren der Polymerzusammensetzung als einem aktiven Inhaltsstoff, erhalten ist.

8. Artikel, der mit dem Oberflächenbehandlungsmittel gemäß Anspruch 7 behandelt ist.

9. Optischer Artikel, der mit der Oberflächenbehandlungsmittel gemäß Anspruch 7 behandelt ist.

## Revendications

1. Composition de polymère contenant un groupe fluorooxyalkylène comprenant un polymère contenant un groupe fluorooxyalkylène ayant un groupe silyle hydrolysable à une extrémité et un polymère contenant un groupe fluorooxyalkylène ayant des groupes silyle hydrolysables aux deux extrémités, dans laquelle les polymères contenant des groupes fluorooxyalkylène sont représentés par la formule (1) suivante,
A-Rf¹-B (1)
dans laquelle Rf¹ représente un groupe fluorooxyalkylène linéaire divalent ayant 5 à 100 motifs de répétition représentés par -C_{d}F_{2d}O-, dans laquelle « d » représente, indépendamment l'un de l'autre, un nombre entier de 1 à 6 ; et A et B représentent, indépendamment l'un de l'autre, un groupe Rf² ou un groupe représenté par la formule (2) suivante, dans laquelle Rf² est choisi dans le groupe constitué par F, H et un groupe fluoré monovalent ayant un groupe -CF₃ ou -CF₂H à l'extrémité, 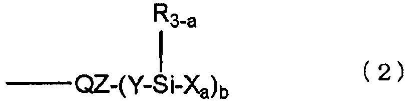 dans laquelle Q représente un groupe organique divalent, Z représente un groupe de liaison divalent à heptavalent ayant une structure silalkylène dans laquelle 2 atomes de silicium sont liés par l'intermédiaire d'un groupe alkylène ou une structure silarylène dans laquelle 2 atomes de silicium sont liés par l'intermédiaire d'un groupe arylène et ne comportant pas de liaison siloxane, R représente un groupe alkyle ayant 1 à 4 atomes de carbone ou un groupe phényle, X représente un groupe hydrolysable, Y est un groupe de liaison représenté par C_{c}H_{2c} ou C₂H₄-CᵣF₂ᵣ-C₂H₄, « a » représente 2 ou 3, et « b » représente un nombre entier de 1 à 6, et « c » représente un nombre entier de 1 à 10, « r » représente un nombre entier de 1 à 6 ;
dans lequel le groupe Rf² représente 30 à 75 % en moles, par rapport au total de tous les groupes terminaux dans la composition.

2. Composition de polymère contenant un groupe fluorooxyalkylène selon la revendication 1, dans laquelle la composition comprend 40 à 100 % en moles du polymère contenant un groupe fluorooxyalkylène ayant un groupe silyle hydrolysable à une extrémité, et 0 à 60 % en moles du polymère contenant un groupe fluorooxyalkylène ayant des groupes silyle hydrolysables aux deux extrémités, par rapport au total des moles du polymère modifié à une extrémité et du polymère modifié aux deux extrémités.

3. Composition de polymère contenant un groupe fluorooxyalkylène selon l'une quelconque des revendications 1 et 2, dans laquelle Rf¹ est un groupe fluorooxyalkylène linéaire divalent représenté par la formule (5) suivante,
-CF₂(OC₂F₄)_{f}(OCF₂)_{g}OCF₂- (5)
dans laquelle « f » représente un nombre entier de 0 à 80, « g » représente un nombre entier de 1 à 80, et un total de « f » et « g » est de 5 à 100, et ces motifs de répétition peuvent être séquencés de manière aléatoire.

4. Composition de polymère contenant un groupe fluorooxyalkylène selon l'une quelconque des revendications 1 à 3, dans laquelle Z est un groupe siléthylène ou un groupe silphénylène.

5. Composition de polymère contenant un groupe fluorooxyalkylène selon l'une quelconque des revendications 1 à 4, dans laquelle Q est un groupe hydrocarboné ayant 2 à 12 atomes de carbone et peut avoir une ou plusieurs liaisons choisies dans le groupe constitué par une liaison amide, une liaison éther, une liaison ester et une liaison vinyle.

6. Composition de polymère contenant un groupe fluorooxyalkylène selon l'une quelconque des revendications 1 à 5, dans laquelle X est un groupe choisi dans le groupe constitué par les groupes alcoxy, les groupes oxyalcoxy, les groupes acyloxy, les groupes alcényloxy et les groupes halogène.

7. Agent de traitement de surface comprenant la composition de polymère contenant un groupe fluorooxyalkylène selon l'une quelconque des revendications 1 à 6 et/ou une composition de polymère contenant un groupe fluorooxyalkylène comprenant un condensat d'un hydrolysat obtenu en hydrolysant partiellement la composition de polymère en tant qu'ingrédient actif.

8. Article traité avec l'agent de traitement de surface selon la revendication 7.

9. Article optique traité avec l'agent de traitement de surface selon la revendication 7.
